# EUROPEAN PATENT SPECIFICATION

(11) **EP 1 371 244 B1**
(45) Date of publication and mention of the grant of the patent: **11.05.2005**
(21) Application number: 02704794.3
(22) Date of filing: 22.03.2002
(51) Int. Cl.: H04Q 7/22

(54) **MANAGEMENT OF DATA TRANSMISSION CAPACITY**
VERWALTUNG DER DATENÜBERTRAGUNGSKAPAZITÄT
GESTION DE CAPACITE DE TRANSMISSION DE DONNEES

(30) Priority: 22.03.2001 FI 20010595
(43) Date of publication of application: 17.12.2003
(73) Proprietor: TeliaSonera Finland Oyj, 00510 Helsinki (FI)
(72) Inventor: KAIKKONEN, Heikki, FIN-00670 Helsinki (FI)
(74) Representative: Helino, Timo
(86) International application number: PCT/FI2002/000247
(87) International publication number: WO 2002/082839

(56) References cited:
- EP-A2- 0 785 696
- WO-A1-00/28706
- WO-A1-99/52305
- WO-A2-98/24250
- US-A1- 2001 034 239

## Description

### FIELD OF THE INVENTION

The present invention relates to telecommunication technology. The present invention concerns a method for regulating the data transmission band used by a packet-switched service in a data transmission system.

### BACKGROUND OF THE INVENTION

A data transmission system consists of a large number of different parts: terminals, routers, networks of different service providers, etc. A single end-to-end data link may involve networks administered by different parties. The data transmission speed may vary in different parts of the end-to-end data link.

The services provided in a telecommunication network are of widely varying nature. For some services, it is sufficient to have information transmitted without any requirements regarding time or quality to a receiver. Other services again require a smooth and uninterrupted data transmission speed from end to end. An example of a service of this type is real-time video image transmission.

An essential property of a packet-switched data network is that it has a certain maximum data transmission capacity. If the capacity required by the users of the data network exceeds the maximum transmission capacity, then it will be necessary to share the capacity on certain principles. In the worst case, some of the users of the data network are left momentarily or completely without data transmission capacity. The transmission capacity of packet-based data transmission is typically limited by a "bottleneck" formed by a given part of the transmission, reducing the transmission capacity. The bottleneck may be part of a given operator's own or hired network. There may also be other factors contributing towards creating a bottleneck. Geographic factors, questions regarding the costs of building or hiring a network and, in the case of wireless networks, transmission capacity of air space are circumstances that lead to the formation of bottlenecks.

If the frequencies needed for data transmission can be licensed or if the construction of fiber optic cable links is freely allowed, the situation can be solved via high network construction costs. In this case, the principle in the design of the data transmission capacity is that all individual subscribers use up their maximum capacity until it is limited by some other technical property of the data network.

In the present application, the term 'operator' refers to a party providing services via a data network to different customers. Operators have an increasing need to be able to work in a low-capacity environment for the benefit of certain selected customers and/or services. 'Selected customers' here refers to customers who have separately agreed with the operator about the quality of service. In order to be able to serve the customers in an optimal manner, the operator needs to be informed in case a service process transmitted by a network has not been implemented in the manner agreed with the customer. When a guaranteed transmission band over several networks is sold to a customer in connection with a given service, a sufficient transmission band has to be ensured for the service.

The problem of sharing the transmission capacity is visible especially in mobile communication networks, in which subscribers are offered a higher capacity than before. Increasing the transmission capacity of the actual transmission system is a slow and expensive process.

The problem at present is that the sharing of transmission capacity in wireless data transmission systems is not a controlled process, and the capacity will not be sufficient in all conditions for all customers or services.

WO-A2-9824250 relates to a method for improving performance of a mobile communications system that uses a multiple access reservation protocol. In the method an exclusive priority for use of at least a first channel is allocated for carrying downlink packet traffic. A second channel is reserved for enabling uncontended access by uplink packet traffic and an exclusive priority for use of at least a third channel is allocated for carrying the uplink packet traffic. In the reference publication, a mobile station is guaranteed both a bandwidth for packet transfers and a constant uplink and downlink delay.

WO-A1-9952305 relates to a method for controlling quality of service in a packet radio system and a packet radio system. In the method the quality of service is controlled with the amount of data to be sent to the subscriber terminals in one transmission. The invention is based on the idea that subscriber terminals allocated to the same radio resource are served in turn. Of the subscriber terminals allocated to the same radio resource the subscriber terminal to be served is switched to the following always when the mobile telephone network requests acknowledgement of the data blocks sent to the previous subscriber terminal. In the invention, the service time may vary among subscribers of different service classes. By controlling the length of an acknowledgement sequence, i.e. the amount of data sent to each subscriber terminal in one transmission, among different subscribers the data transmissions of various service classes can be provided with a different amount of radio resources, or transmission time.

### OBJECT OF THE INVENTION.

The object of the invention is to eliminate the above-mentioned drawbacks or at least to significantly alleviate them. A specific object of the invention is to disclose a new type of method for optimizing the utilization of the transmission capacity of a data transmission system.

### SHORT DESCRIPTION OF THE INVENTION

The present invention concerns a method for optimizing the transmission capacity of a data transmission system and controlling the quality of the service received by the customer.

The invention concerns a method for controlling the transmission band used by a packet-switched service in a data transmission system in which the subscriber terminals are wireless mobile terminals used by customers and which comprises one or more data transmission links having a limited transmission capacity. In the method a correspondence between location data and data transmission links having a limited data transmission capacity is created. Furthermore, it is determined whether a new or a previous location data of a wireless terminal of a subscriber corresponds to at least one data transmission link having limited data transmission capacity. The location data consists of e.g. a geographic coordinate, a cell identifier, a base station identifier, routing data or other location data that can be unambiguously related to the transmission topology of the data transmission system. The subscriber location data may be determined in different ways. The location data of a subscriber may be determined e.g. when the customer enters the data transmission system or exits from it, or when the customer's location in the data transmission system changes or when the customer himself requests location updating. It is also determined based on the location data of the wireless terminal: the data transmission link used by the wireless terminal, the link's capacity and the band control technology responsible for said data transmission link from a transmission topology of the data transmission system.

According to the invention, service descriptions and service level parameters of subscribers using the data transmission link having limited data transmission capacity are retrieved, wherein the service description illustrates the nature of the service in relation to the bandwidth required by it, and the bandwidth of the data transmission traffic of the subscribers using the data transmission link having limited data transmission capacity is regulated based on the service descriptions and service level parameters and capacity of the transmission link by the band control technology responsible for the data transmission link. The subscriber data include e.g. a subscriber quality classification, subscriber type, subscriber location and type of the data relating to the subscriber. The traffic is regulated e.g. by comparing the quality classifications defined for the subscribers and giving a larger data transmission band to a subscriber having a higher quality classification.

In an embodiment of the invention, log data is generated if the data transmission band required by the subscriber or service cannot be allocated to it in full.

In an embodiment of the invention, information indicating which subscribers and services use a data transmission link under regulation at different times is maintained.

In an embodiment of the invention, the data transmission system comprises a mobile communication network or a wide-band wireless communication network.

The present invention makes it possible to optimize and control the transmission capacity of a packet-switched data transmission system especially at so-called bottleneck points. By applying the method of the invention, data transmission capacity can be assigned to subscribers with whom a certain level of service has been agreed on beforehand.

### LIST OF DRAWINGS

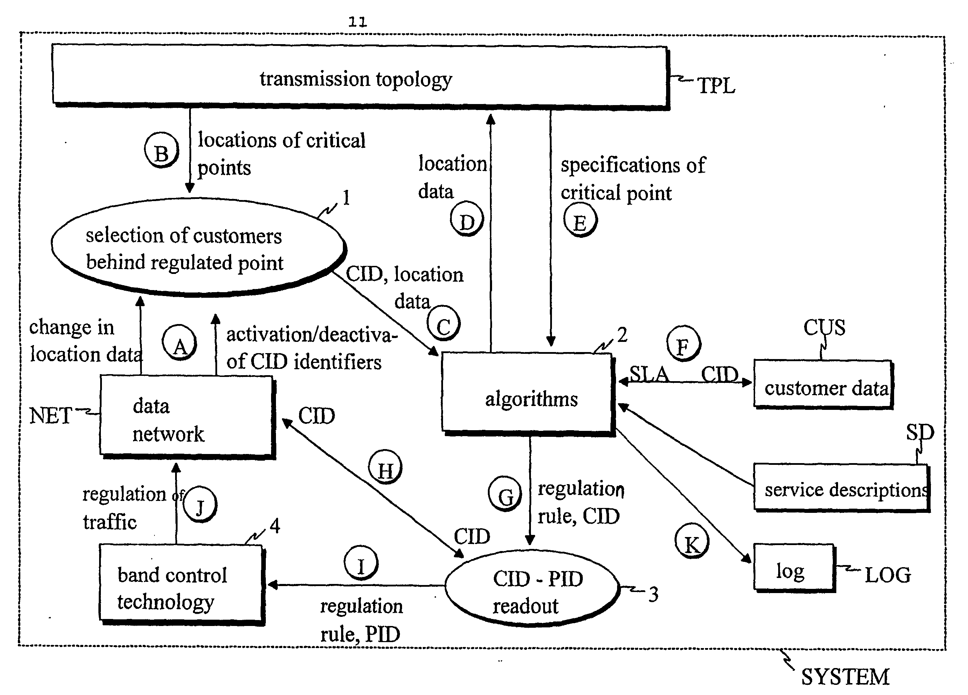

In the following, the invention will be described in detail by the aid of an embodiment example, wherein
Fig. 1 illustrates the operation of the method of the invention.

### DETAILED DESCRIPTION OF THE INVENTION

Fig. 1 presents a preferred example of the operation of the method of the invention in a data transmission system SYSTEM. The present invention consists of the following sub-assemblies:
- new type of application of packet-based band control technology
- modeling of transmission topology consid-ering band limitations
- comparability of changeable customer loca-tion data to said transmission topology
- modeling of customer services and quality classifications
- algorithms controlling data transmission in "bottlenecks".

In the method of the invention, customers having data traffic over communication bottlenecks are identified. 'Bottleneck' refers to a portion of the data network where the information transmission capacity is limited. The locations of bottlenecks are modeled in the transmission topology TPL. The location data associated with the customer may be e.g. a geographic coordinate, a cell identifier, a base station identifier, routing data or other location data that can be unambiguously related to the transmission topology TPL.

When a customer enters the data network NET, exits from the data network NET, changes his location in it or requests location updating, information about this is transmitted further. If the data network NET is additionally capable of producing information as to the service used by the customer, its beginning and termination, corresponding information is likewise transmitted further. According to stage A, the data network NET produces customer location data. The transmission topology determines the existing bottlenecks and their locations in the data network NET, stage A. If the location data coincides with the bottleneck points defined in the transmission topology TPL, then the customers behind the regulated point are selected, step 1. The customer identity data and location data are further transmitted to the algorithms 2, stage C. Service information that may have been obtained at stage A is also transmitted to the algorithms 2.

Based on the customer location data, the algorithms 2 determine from the transmission topology the data transmission link concerned, its type and capacity as well as the band control technology responsible for the data transmission link, stages D and E. 'Band control technology' 4 refers to the actual technology physically controlling the data transmission band. The control technology may be distributed or concentrated in any part of the data transmission system SYSTEM, e.g. in telephone switching centers, routers, switches, etc. In the concentrated control method, the algorithms 2 maintain information regarding all customers using the bottleneck and the services used, between which bandwidth is shared in a manner prescribed by the algorithms. The method of the invention assumes no attitude regarding the placement, structure or physicality of the implementation of the band control technology 4 or the protocols used.

The algorithms additionally have access to information regarding the quality classifications SLA of customers. The quality classifications associated with the customers are obtained from the customer data CUS, stage F. The customer data include e.g. the identity, quality classification, type and location of the customer and the data type associated with the customer. 'Quality classifications' SLA refer to the service properties and requirements associated with a given customer. The quality classifications SLA are customer-dependent. For example, if a customer is prepared to pay more than a normal price for a service, he may be assigned a quality classification that is higher than for a customer who pays less. Further, the algorithms 2 have access to service description data SD. The service description data SD consists of e.g. data indicating the nature of the services in relation to the bandwidth required by them. Based on the basic information regarding the data transmission link under control, the service description data SD and the customer data CUS, the algorithms 2 produce a rule that controls data transmission over the data transmission link being regulated, stage G. The algorithms 2 in themselves have access to information as to which cus-tomers communicate over the data transmission link being regulated and what services they use.

The method of the invention assumes no attitude regarding the actual implementation of the algorithms 2. In the simplest case, the function of the algorithm is e.g. to observe the SLA classifications (SLA, Service Level Agreement) (high/low) of customers having data traffic over a critical data transmission link. Based on the aforesaid classifications, the algorithm produces a rule on the basis of which the band control technology 4 gives a priority to packet-switched communication of customers classified as "high" in relation to packet-switched communication of customers classified as "low" that use the same data transmission link.

If the customer identity data CID differs from the packet identity data PID required by the band control technology 4, then a relevant query is made in the data network NET, stages H and I. 'Customer identity data' CID refers e.g. to the MSISDN. number (MSISDN, Mobile Subscriber Integrated Services Digital Number) of a mobile communication network. The band control technology 4 is not necessarily able to use the customer identity data CID. The packet identity data PID corresponding to the customer identity data CID is determined from the data network NET. 'Packet identity data' PID refers e.g. to public IP addresses (IP, Internet Protocol). The rule generated by the algorithm 2 and the packet identity data PID are transmitted to the band control technology 4. In the manner prescribed by the algorithms 2, the band control technology 4 controls the customer's packet-based communication in relation to other customers communicating over the data transmission link subject to regulation, stage J.

Since the bottleneck has a limited data transmission capacity, all customers or services will not necessarily be allocated the data transmission band they require. If the algorithms 2 are unable to allocate the band defined for a given customer or service, then a corresponding note is entered in a log file LOG, stage K. The data entered in the log file LOG includes e.g. the date, time, customer identity data CID, packet identity data PID, data transmission link information, service used, and other details relating to the non-implementability of the service.

The data network NET or a part of it is e.g. an existing or future mobile communication network or a wide-band wireless data transmission network. The mobile communication network is e.g. a GSM network (GSM, Global System for Mobile communications), a GPRS network (GRPS, General Packet Radio Service), an UMTS network (UMTS, Universal Mobile Telecommunication System). The wide-band wireless data transmission network is e.g. a WLAN network (WLAN, Wireless Local Area Network).

The invention is not limited to the examples of its embodiments described above; instead, many variations are possible within the scope of the inventive idea defined in the claims.

## Claims

1. Method for controlling the data transmission band used by a packet-switched service in a data transmission system in which the subscriber terminals are wireless terminals used by subscribers, which may move in the data transmission system, said data transmission system comprising one or more data transmission links having a limited data transmission capacity, said method comprising the steps of:
creating a correspondence between location data and data transmission links having a limited data transmission capacity;
determining whether a new or a previous location data of a wireless terminal of.a subscriber corresponds to at least one data transmission link having limited data transmission capacity;
determining based on the location data of the wireless terminal: the data transmission link used by the wireless terminal, the link's capacity and the band control technology responsible for said data transmission link from a transmission topology of the data transmission system;
retrieving service descriptions and service level parameters of subscribers using the data transmission link having limited data transmission capacity, wherein the service description illustrates the nature of the service in relation to the bandwidth required by it; and
regulating the bandwidth of the data transmission traffic of the subscribers using the data transmission link having limited data transmission capacity based on the service descriptions and service level parameters and capacity of the transmission link by the band control technology responsible for the data transmission link.

2. Method according to claim 1, **characterized in that** log data is generated if the data transmission band required by the subscriber or service cannot be allocated to it in full.

3. Method according to claim 1, **characterized in that** service classifications defined for the subscribers are compared and a larger data transmission band is allocated to a subscriber having a higher service classification.

4. Method according to claim 1, **characterized in that** the location data consists of a geographic coordinate, a cell identifier, a base station identifier, routing data or other location data that can be unambiguously related to the transmission topology of the data transmission system.

5. Method according to claim 1, **characterized in that** the customer location data is updated when:
the customer enters the data transmission system; or
the customer exits from the data transmission system; or
the customer's location in the data transmission system changes, or
the customer requests location updating.

6. Method according to claim 1, **characterized in that** the subscriber data includes:
identity of subscriber; and/or
quality classification of subscriber; and/or
subscriber type; and/or
location of subscriber; and/or
data type associated with subscriber.

7. Method according to claim 1, **characterized by** maintaining information indicating which subscribers and services use the data transmission link under regulation at different times.

8. Method according to any one of the preceding claims 1, 2, 3, 4, 5, 6 or 7, **characterized in that** the data transmission system comprises a mobile communication network.

9. Method according to any one of the preceding claims 1, 2, 3, 4, 5, 6 or 7, **characterized in that** the data transmission system comprises a wide-band wireless data transmission network.

## Patentansprüche

1. Verfahren zum Steuern des Datenübertragungsbandes, welches von einem paketgeschalteten Dienst in einem Datenübertragungssystem benutzt wird, in welchem die Teilnehmerendgeräte drahtlose bzw. Funk-Endgeräte sind, welche von den Teilnehmern benutzt werden, welche sich in dem Datenübertragungssystem bewegen können, wobei das Datenübertragungssystem eine oder mehrere Datenübertragungsverbindungen aufweist, welche eine begrenzte Datenübertragungskapazität besitzen, wobei das Verfahren die Schritte aufweist:
Schaffen einer Übereinstimmung zwischen Ortsdaten und Datenübertragungsstrecken bzw. -verbindungen, welche eine begrenzte Datenübertragungskapazität besitzen;
Bestimmen, ob neue oder vorausgegangene Ortsdaten auf einem Funkendgerät eines Teilnehmers mit wenigstens einer Datenübertragungsverbindung übereinstimmen, welche eine begrenzte Datenübertragungskapazität besitzt;
Bestimmen auf der Grundlage der Ortsdaten des Funkendgerätes: die Datenübertragungsverbindung, welche von dem Funkendgerät benutzt wird, die Kapazität der Verbindung bzw. Strecke und die Bandsteuertechnologie, welche für den Datenübertragungsanschluss verantwortlich ist aus einer Übertragungstopologie des Datenübertragungssystems;
Herausholen von Service- bzw. Dienst-Beschreibungen und Service- bzw. Dienst-Pegelparametern der Teilnehmer, wobei die Datenübertragungsverbindung benutzt wird, welche eine begrenzte Datenübertragungskapazität besitzt, wobei die Dienst-Beschreibung die Eigenschaft des Dienstes in Bezug auf die von ihm erforderliche Bandbreite beschreibt; und
Regeln der Bandbreite des Datenübertragungsverkehrs der Teilnehmer, wobei die Datenübertragungsverbindung benutzt wird, welche eine begrenzte Datenübertragungskapazität besitzt, basierend auf den Dienst-Beschreibungen und den Dienst-Pegelparametern und der Kapazität der Übertragungsverbindung bzw. -strecke über die Bandsteuertechnologie, welche für die Datenübertragungsstrecke verantwortlich ist.

2. Verfahren nach Anspruch 1, **dadurch gekennzeichnet, dass** Log- bzw. Anmeldedaten generiert werden, wenn das Übertragungsband, welches von dem Teilnehmer oder Dienst angefordert wird, ihm nicht vollständig zugeordnet werden kann.

3. Verfahren nach Anspruch 1, **dadurch gekennzeichnet, dass** die Dienst-Klassifizierungen, welche für die Teilnehmer definiert sind, verglichen werden und ein größeres Datenübertragungsband einem Teilnehmer zugeordnet wird, welcher eine höhere Dienst-Klassifizierung besitzt.

4. Verfahren nach Anspruch 1, **dadurch gekennzeichnet, dass** die Ortsdaten aus einer geographischen Koordinate, einer Zellkennung, einer Basisstationskennung, Streckenführungsdaten oder anderen Ortsdaten bestehen, die unzweideutig auf die Übertragungstopologie des Datenübertragungssystems bezogen werden können.

5. Verfahren nach Anspruch 1, **dadurch gekennzeichnet, dass** die Kundenortsdaten aktualisiert werden, wenn:
der Kunde in das Datenübertragungssystem eintritt; oder
der Kunde aus dem Datenübertragungssystem austritt; oder
der Ort des Kunden sich in dem Datenübertragungssystem ändert, oder
der Kunde eine Ortsaktualisierung anfordert.

6. Verfahren nach Anspruch 1, **dadurch gekennzeichnet, dass** die Teilnehmerdaten beinhalten:
die Identität des Teilnehmers; und/oder
die Eigenschaftsqualifizierung des Teilnehmers; und/oder
die Art des Teilnehmers; und/oder
den Ort des Teilnehmers; und/oder
den Datentyp, welcher mit dem Teilnehmer verbunden ist.

7. Verfahren nach Anspruch 1, **gekennzeichnet durch** das Aufrechterhalten von Information, welche aufzeigt, welche Teilnehmer und Dienste die Datenübertragungsverbindung **durch** Regulierung zu verschiedenen Zeiten nutzen.

8. Verfahren nach einem der vorausgehenden Ansprüche 1, 2, 3, 4, 5, 6 oder 7, **dadurch gekennzeichnet, dass** das Datenübertragungssystem ein mobiles Kommunikationsnetzwerk aufweist.

9. Verfahren nach einem der vorausgehenden Ansprüche 1, 2, 3, 4, 5, 6 oder 7, **dadurch gekennzeichnet, dass** das Datenübertragungssystem ein Breitbandfunkdaten-Übertragungsnetzwerk aufweist.

## Revendications

1. Procédé de gestion de la bande de transmission de données utilisée par un service commuté par paquets dans un système de transmission de données dans lequel des terminaux d'abonnés sont des terminaux sans fil utilisés par des abonnés, qui peut se déplacer dans le système de transmission de données, ledit système de transmission de données comprenant une ou plusieurs lignes de transmission de données ayant une capacité de transmission de données limitée, ledit procédé comprenant les étapes consistant à :
créer une correspondance entre des données de position et des lignes de transmission de données ayant une capacité de transmission de données limitée ;
déterminer si de nouvelles ou de précédentes données de position d'un terminal sans fil d'un abonné correspondent à au moins une ligne de transmission de données ayant une capacité de transmission de données limitée ;
déterminer, en se basant sur les données de position du terminal sans fil : la ligne de transmission de données utilisée par le terminal sans fil, la capacité de la ligne et la technologie de gestion de la bande passante responsable de ladite ligne de transmission de données à partir d'une topologie de transmission du système de transmission de données ;
retrouver des descriptions de service et des paramètres de niveau de service des abonnés utilisant la ligne de transmission de données ayant une capacité de transmission de données limitée, dans lequel la description de service illustre la nature du service en relation avec la bande passante dont il a besoin ; et
réguler la bande passante du trafic de transmission de données des abonnés utilisant la ligne de transmission de données ayant une capacité de transmission de données limitée en se basant sur les descriptions de service, les paramètres de niveau de service et la capacité de la ligne de transmission fournis par la technologie de gestion de la bande passante responsable de la ligne de transmission de données.

2. Procédé selon la revendication 1, **caractérisé en ce que** des données de contrôle sont créées si la bande de transmission de données requise par l'abonné ou le service ne peut pas lui être allouée en totalité.

3. Procédé selon la revendication 1, **caractérisé en ce que** les classifications de service définies pour les abonnés sont comparées et qu'une bande de transmission de données plus large est allouée à un abonné occupant une classification de service plus élevée.

4. Procédé selon la revendication 1, **caractérisé en ce que** les données de position comprennent des coordonnées géographiques, un identificateur de cellule, un identificateur de station de base, des données de routage ou d'autres données de position qui peuvent être reliées sans ambiguïté à la topologie de transmission du système de transmission de données.

5. Procédé selon la revendication 1, **caractérisé en ce que** les données de position du client sont mises à jour lorsque :
le client se connecte au système de transmission de données ; ou
le client se déconnecte du système de transmission de données ; ou
la position du client dans le système de transmission de données change, ou
le client demande que la position soit mise à jour.

6. Procédé selon la revendication 1, **caractérisé en ce que** les données d'abonné comprennent :
l'identité de l'abonné ; et/ou la classification qualifiant l'abonné ; et/ou le type d'abonné ; et/ou
la position de l'abonné ; et/ou
le type de données associé à l'abonné.

7. Procédé selon la revendication 1, **caractérisé par** l'étape consistant à conserver les informations désignant quels abonnés et quels services utilisent la ligne de transmission de données qui est sous contrôle, à des moments différents.

8. Procédé selon l'une quelconque des revendications précédentes 1, 2, 3, 4, 5, 6 ou 7, **caractérisé en ce que** le système de transmission de données comprend un réseau de télécommunication mobile.

9. Procédé selon l'une quelconque des revendications précédentes 1, 2, 3, 4, 5, 6 ou 7, **caractérisé en ce que** le système de transmission de données comprend un réseau de transmission de données sans fil à large bande.
